# EUROPEAN PATENT SPECIFICATION

(11) **EP 2 157 526 B1**
(45) Date of publication and mention of the grant of the patent: **30.04.2014**
(21) Application number: 09167708.8
(22) Date of filing: 12.08.2009
(51) Int. Cl.: G06F 21/00

(54) **RFID reader with embedded attack detection heuristics**
RFID-Lesegerät mit eingebetteter Angriffserkennungsheuristik
Lecteur RFID avec méthodes heuristiques de détection d'attaque incorporées

(30) Priority: 14.08.2008 US 88778 P
(43) Date of publication of application: 24.02.2010
(73) Proprietor: ASSA ABLOY AB, 107 23 Stockholm (SE)
(72) Inventor: Davis, Michael, Amherst, NY 14228 (US)
(74) Representative: Grosfillier, Philippe

(56) References cited:
- EP-A- 1 209 551
- EP-A- 1 418 484
- WO-A-2005/038633
- US-A- 6 084 977
- US-A1- 2002 078 381
- US-A1- 2005 216 955

## Description

### FIELD OF THE INVENTION

The present invention is generally directed to readers capable of reading machine-readable credentials and attacks directed against such readers and the communications between readers and other devices. More specifically, the present invention provides methods for detecting attempts to compromise the security and authentication measures used by RFID readers and their countermeasures.

### BACKGROUND

Access control systems invariably use a reader to read and sometimes write machine readable credentials such as magnetic stripe, 125 kHz Prox, 13.56 MHz contactless smart cards, etc. As the hacker community becomes increasingly sophisticated, more and more exploits are released that can compromise the information that is read by a reader and subsequently transmitted to an upstream device such as an access control panel, door controller, host computer, etc. Exploits are published by not only the hacker community but legitimate security researchers and educational institutions. Curious people, as well, are studying the strengths and weakness of access control systems and components. Sometimes the discovered weaknesses and details of exploits are published in an irresponsible manner and, with the Internet's far reaching availability, there is a threat caused by the widespread availability of this information. This information may enable individuals who do not possess the skill or knowledge themselves to exploit systems, e.g., *script kiddies*. Indeed several such exploits have been recently demonstrated at the DEFCON and Black Hat Conferences by individuals such as Zac Franken with his Gecko and Chameleon devices, Jonathan Westhues's Proxmarkii RFID cloning device, and Adam Laurie's RFIDIOt (RFIDIOt is an open source python library which can be used to clone RFID transponders).

Without questioning the motives of any individual or institution studying such systems, there is a real concern that some of the published discovered weakness can be exploited by individuals with dubious intentions to perpetrate crimes against people or institutions.

Even worse is the individual or organization that develops such exploits and, instead of publishing them, uses them for nefarious purposes or even sells them to third parties for financial gain.

Document US-A-6 084 977 discloses a method of protecting a computer system from record-playback breaches of security.

Document WO 2005/038633 discloses a device and method for securing and monitoring protected data.

Document EP 1 209 551 discloses a system and method of preventing unauthorized access to computer resources.

### SUMMARY

While no system can ever be 100% effective against such threats especially since "you don't know what you don't know" (Confucius), it is one intention of the present invention to try and thwart or ameliorate these attacks or, at least detect them and provide proper notification so that corrective action can be taken.

The access control systems and methods according to the invention are defined in the claims.

If the detection methods and countermeasures as defined in the claims are implemented in the reader, then embodiments of the present invention can provide a significant advantage in upgrading the security of legacy upstream devices in which the firmware cannot or will not be updated because of cost or the fact that the manufacturer no longer supports such a system. While it is optimal for these detection methods to be incorporated in the reader, they may also be included in the upstream device as well. For legacy systems in which neither the reader nor the upstream device can be updated to incorporate such detection mechanisms or replaced with a device that already incorporates such detection mechanisms, a device that resides between a reader and the upstream device can be installed that incorporates these detection mechanisms.

These and other advantages will be apparent from the disclosure of the invention(s) contained herein. The below-described embodiments and above-described configurations are neither complete nor exhaustive. As will be appreciated, other embodiments of the invention are possible utilizing, alone or in combination, one or more of the features set forth above or described in detail below.

### BRIEF DESCRIPTION OF THE DRAWINGS

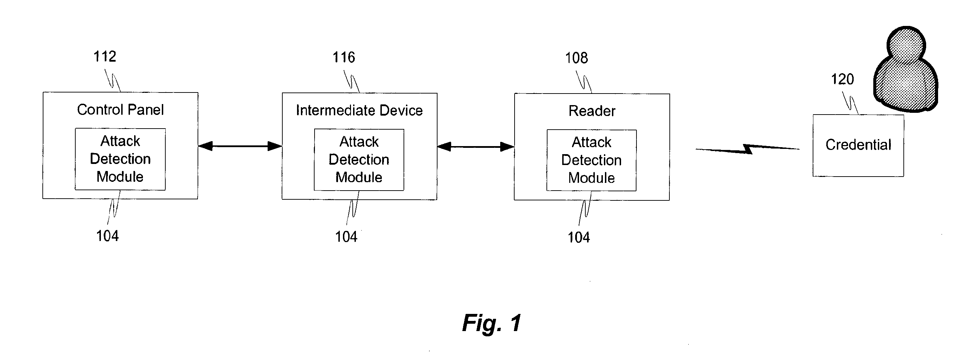

Fig. 1 depicts an exemplary access control system in accordance with at least some embodiments of the present invention.

### DETAILED DESCRIPTION

As can be seen in Fig. 1, an attack detection module 104 may be incorporated into one or more components of a secure access system 100. More specifically, a single attack detection module 104 may be provided in an RFID reader 108, a host or control panel 112, and/or an intermediate device 116 residing between the reader 108 and control panel 112. The reader 108 is generally adapted to exchange messages with a Radio Frequency IDentification (RFID) device or credential 120 using known RF communication techniques. Alternatively, the reader 108 may be adapted to read biometric data (*e*.*g*., perform a retina scan and obtain retina data, perform a fingerprint scan and obtain fingerprint data, perform a face scan and obtain facial data, or obtain any other type of known biometric signature) directily from a user, rather than reading a credential 120 carried by a user. As can be appreciated by one skilled in the art, however, the communications between the credential 120 and reader 108 may be contact based or magnetic based. As an example, the credential 120 may comprise a magstripe or the like and the credential 120 is slid through a magstripe reader of the reader 108 to effect a message exchange. Often times the communications between the credential 120 and reader 108 are exploited by attackers in an attempt to compromise the system 100. Other times, the communications between the reader 108 and the intermediate device 116 and/or control panel 112 are exploited during an attack.

In accordance with at least some embodiments of the present invention, a plurality of attack detection modules 104 may be provided on a plurality of different components to act cooperatively and detect potential attacks on the system 100. In some embodiments, the logic of a single attack detection module 104, discussed in further detail below, can be split among a plurality of attack detection modules 104 or may be incorporated into a single attack detection module 104, depending upon system requirements.

The following are methods of detecting attacks, compromises, and other illicit attempts at compromising the integrity of a credential, reader or its communications path in an attempt to gain illicit entry into a facility protected by physical access control systems connected to such reader. An attack detection module 104 or a combination of such modules may be provided to execute these methods and detect such attack attempts.
- Transaction Metering: Utilize a *metering* system to limit the rate that credentials can be read. For example, it typically takes 3 or more seconds for a person to present his credential to a reader and subsequently react to the reader's LED and then open the door and proceed through it assuming that the presented credential has been granted access. Preventing cards from being read again in less than 3 seconds only slows down a brute force device designed to generate illicit spoofed credentials to crank through the many iterations in an attempt to discover a valid credential. Of course, 3 seconds is just an example and should be adjusted to suit the appropriate context of the specific door. If a brute force attack is detected (*i*.*e*., the reader is reading cards at a rate faster than 3 seconds), this time can be increased dynamically and, after a predetermined time period has been reached, the reader may be completely disabled until it is reset by human intervention.
- Card Number Brute Forcing: Credentials utilize several fields to contain specific information. For example, most credentials used in access control have a *card number* field. While the chances of two credentials being presented consecutively with a card number differing by one is not completely unrealistic, the odds are essentially nil that three people would present credentials that are consecutive and only differ by one. When such an event occurs, it can be assumed that a brute force generator is being employed. Extending this heuristic detection even further, patterns of such data may be detected, e.g., the absolute value of the numerical distance between successive cards is always a fixed number *n*.
- Site Code Brute Forcing: The *site code* is a field that is always the same for any given installation and is used to insure that credentials from one site do not work at the site across the street. Unlike the card number field, if this field differs from the previous credential by an observable pattern even once, there is a high probability that a brute force attack is underway. Certainly incrementing and decrementing patterns are most likely being caused by a brute force device.
- Site Code Filtering: Since the site code field is always invariably always the same for any given installation, a reader could memorize the first site code read after it is powered up and reject all credentials that are subsequently read which contain a different site code. In the case where more than one site code is being used at a given installation, a list could be stored. The number of entries in that list would be limited so that once a different site code not on the list is found the reader would exceed the maximum number of allowed site codes; in other words, the reader has detected a problem. Alternatively, the site code could be programmed into the reader by a command card or any other method and, in the case where more than one site code is utilized at an installation, a list of valid site codes could be programmed into the reader. Detection of a site code not present on the list will not occur unless something is wrong and detection of *more than one* site code not present in the list indicates with certainty that some sort of attack has been detected. Higher thresholds for non-recognized site codes can also be utilized. Once such a situation is detected, a message or report may be generated for transmission to a security administrator or the reader 108 may be shut down temporarily, thereby thwarting any further attack attempts.
- Permitted Format Lockdown: *Formats* are used in the access control industry to describe the list of *fields* that are present in the output data stream of a decoded card's data that has been read by a reader. Each *field* is a collection of bits with a defined data type and length. For example, in the most popular 26-bit Wiegand format as defined in the SIA AC-01 Access Control Standard¹, the entire contents of which are hereby incorporated herein by reference, the card number field is defined as being a 16-bit number in the range of 0 to 65,535.
   1 SIA AC-01-1996.10, Access Control Standard Protocol for the 26-bit Wiegand Reader Interface. This standard is also listed as a normative reference in the US Department of Homeland Security TWIC Reader Hardware and Card Application Specification, May 30, 2008
   There are several ways to increase the security of an access control system in the context of formats. One such example is to only allow the reader itself to accept formats that are actually used in a facility. This may be a single format or several formats. When a format is read that is not allowed, the reader knows that there *could* be a problem. But if more than one wrong format is read within a predetermined time span, then the chances that a problem is occurring (e.g., a brute force attack is being attempted) are relatively higher. Detecting such an event may result in the generation of an alert message which is transmitted to a security administrator or may result in the reader 108 temporarily shutting down (*i*.*e*., discontinuing services).
- Non-Permitted Format Lockdown: Similar to having a list of accepted formats, another technique is the converse in which all possible formats are accepted by the reader *except* for one or more formats. For example, the 26-bit Wiegand format is so popular, that cards for many popular readers are always available at eBay and other on-line web-based commerce sites. With such widespread availability of this popular format, it may not be a good idea to use this format for a particular access control system and, therefore, having the reader *exclude* this format may be desirable. Again, as described previously, when cards are read in formats on the exclusion list, this indicates that there may be an attack underway and certainly if more than one excluded format is read in any given time period, then it is almost certain that an attack of some sort is under way. Detecting such an event may result in the generation of an alert message which is transmitted to a security administrator or may result in the reader 108 temporarily shutting down (*i*.*e*., discontinuing services).
- Format Violation: The data encoded in credentials, as described previously, abides to the rules defined by a particular format. If a credential is read that violates the format's rules, there is a high probability that something is amiss. Any data transmission errors between the card and the reader will have already been dealt with before the actual data is examined. Many readers simply make sure that the data that has been read is identical for at least two or more successive times. Other error detection methods include checksums, CRC, and ECC to name a few. But if the data has been read correctly and the data violates the rules of the format, then a rogue credential may be in play that was created by somebody who didn't quite understand the format - especially if a proprietary and relatively obscure format is utilized. Access Control Systems that utilize proprietary formats make it harder for perpetrators to get enough cards from illegitimate sources for study and reverse-engineer the details of the format. If a rogue credential is detected, then the generation of an alert message may be triggered. The alert message may then be transmitted to a security administrator. This may be done alone or in combination with the reader 108 also temporarily disabling itself.
- Rogue Communications Detection: For readers that are able to monitor communications between itself and the upstream device (*e*.*g*., control panel 112 or intermediate device 116), detecting messages that are different than sent messages as well as "phantom" messages that weren't even sent by the reader is a serious issue. For reader utilizing the Wiegand protocol, this is a real possibility and has already been demonstrated. The Wiegand protocol is susceptible to this type of attack since it utilizes open collector signaling which allows "party-line" communications. It is a simple hardware improvement to any Wiegand-based reader to add the ability to read data on its D0 and D1 data signaling lines. Therefore, one of the embodiments of this invention provides for monitoring and detection of rogue messages. Furthermore, when a rogue message transmission is started, depending on the communications interface being used, the reader can actually destroy or damage the rogue message so it will not be received by the upstream device. For readers using the Wiegand protocol, it is a simple matter to just hold either or both D0 and D1 low for one or more TPW and TPI time periods and/or add additional bits causing a message length error. Detecting a rogue transmission may result in the generation of an alert message which is transmitted to a security administrator or may result in the reader 108 temporarily shutting down (*i*.*e*., discontinuing services).
- RF Anomaly Detection Mechanisms: Another potentially effective mechanism that can be employed is to distinguish between an RF Spoofing Device (RFSD) and a genuine credential. Most electronic spoofing devices will be battery powered because it requires functionality above and beyond just pretending to be a legitimate RFID credential. There are several mechanisms that can be utilized as outlined below:
   One simple test that can be performed is to shut off the reader's RF carrier after a credential has been read. An RFSD would likely continue transmitting if it was an active battery-powered device and did not "track" the RF carrier. Thus, this embodiment shuts off the RF carrier and samples the receive circuitry to make sure that a device is still not transmitting. If the reader detects that the device is still transmitting, then the reader may be able to assume that the device is an illicit device attempting to harm the reader or upstream device. Detecting such an event may result in the generation of an alert message which is transmitted to a security administrator or may result in the reader 108 temporarily shutting down (*i*.*e*., discontinuing services).
   If the RFSD is activated whenever it detects a carrier at the proper frequency, then either before or after a legitimate credential is read, the RF field emitted by the reader can generate a carrier that may trigger the RFSD to start transmitting but would be different enough in power, frequency, phase, etc. so that a genuine RFID credential would not operate, e.g., a very low duty cycle sine wave. So, for example, if this is done at the beginning of a card read cycle and RF data is received by the reader, then it is likely that there is a non-legitimate credential in the RF field of the reader. Similarly, if done at the end of a card read cycle, the RF data being received should stop if it were a legitimate credential. If done randomly at the beginning or end, it would be more difficult for an attacker to overcome but would be just as easy to administer.
   Another method to detect whether an RFSD is being presented vs. a genuine credential, is to alter some characteristic of the RF transmitted by the reader e.g., amplitude, frequency, or phase at either the beginning or end of the card read cycle. For example, if the frequency is altered, then a legitimate RF credential would have an observable change in the received data that "tracks" the electrical characteristic being varied. If the credential 120 does not change its response, then it may be assumed that an illegitimate credential is being presented to the reader 108. Detecting such an event may result in the generation of an alert message which is transmitted to a security administrator or may result in the reader 108 temporarily shutting down (*i*.*e*., discontinuing services).
   Although the methods outlined in this section are not fool proof, especially if the creator of the RFSD is very clever and sophisticated, it raises the security of the reader and will likely detect amateur attacks on the reader. The more sophisticated attacker will likely try find another way to compromise an access control system.
- Redundant Multi-technology Data: As credential technology changes, often times a credential will contain the same or very similar data in different machine-readable technologies. This is especially prevalent in the access control industry as it pertains to RFID credentials. As the very popular 125 kHz legacy technology is replaced with more modern and sophisticated 13.56 MHz contactless smart card credentials, various migration strategies exists for the interim period when a site has both Prox and contactless smart card credentials and/or Prox and contactless smart card readers. There are generally two ways of facilitating the migration strategy. One method employs utilizing multi-technology readers capable of reading both types of credentials and the other method is to create a single credential with both technologies present, usually with similar or identical data. In every case, when all of the readers are replaced with a multi-technology reader, the reader manufacturer instructs the user to disable the older technology. One of the reasons cited is for security reasons, i.e., the multi-technology reader still accepts the older technology which may not be as secure as the newer technology credential. This is correct thinking. However, if multi-technology credentials are also deployed at the site having the same or similar data in both technologies, a better strategy is to actually read both technologies and compare the data read from each technology to make sure that the data matches. This actually increases the overall security because it is more difficult to make an electronic credential spoofer that can support multiple technologies in the same unit. Such spoofers will also be substantially larger as well, thereby making it more difficult to hide. And even if the increased complexity of the spoofer is overcome, it raises the bar at no additional cost to the system administrator since the credential already has both technologies present.

The claimed invention is the Void Card Detection Mechanism: It is based on the fact that invariably all upstream devices signal back to the card reader when a valid card is read and access is permitted. For readers communicating with its upstream device using the Wiegand protocol, the upstream device invariably brings the LEDCTL signal low for valid credentials. This is done to alert the user that he is being granted access and typically takes the form of a visual indicator such as an LED on the reader changing from red to green. If an arbitrary number of credentials have been read during an arbitrary time period and the upstream device has *not* signaled the reader that this was a valid credential, then there is a high degree of certainty that something is amiss. More particularly, if more than *n void* cards are read within a certain time interval, then the reader may be shut down for an ever increasing time penalty. A void card is detected by the fact that valid cards get an acknowledgement by the LEDCTL line being brought low.

In all of the above attack detection methods, it is desirable to have detection event counters and time-delay penalties used individually or in combination and both with adjustable thresholds. Time delay penalties can be dynamic and increase every time an "event' is detected. There could be a maximum time penalty in which no further increases take place or there could be event counter that disables the reader until some external mechanism resets the disable reader condition, or there could be a combination in which there are ever increasing time penalties and when a pre-determined threshold is reached, the reader is disabled. Additionally, event counters can be reset if it has reached the trigger threshold in a certain time interval. For example, three wrong site codes in a 24-hour period may be permissible and after 24-hours has elapsed from the most recent event, the counter is initialized (i.e., reset). It is important to note that most card readers do *not* have real time clocks that know the actual time of day, but most readers can be provided with elapsed time clocks which are easy to implement with no additional firmware. However, one has to be careful that these counters are kept in non-volatile memory so that a perpetrator cannot cycle power in an attempt to defeat certain countermeasures associated with utilizing and resetting the clock.

Furthermore, any events that are detected should be reported back to the upstream device using whatever communication interface and protocol is available in the reader. Additionally, when a serious event is detected, the reader could signal this fact using any available audible and visual annunciator to try and draw attention to the reader and scare off a suspected perpetrator.

In an alternate scenario, it may be desired to actually let a perpetrator into a facility if it is being recorded, e.g., with a CCTV system, for evidence. In this case, the detection of the event can be used to start the recording, flag it in an audit trail log time stamped with the details including date, time, location, and suspected event type. This way these event can be found in historical data and investigated if there is really a problem or not. The fact that readers have any of the embodiments of this invention coupled with the triggering of CCTV can be publicized to the users acting as a further deterrent to this type of activity.

In still another scenario, if the host system is being monitored live by an on-site security staff, a person can actually be dispatched to the reader in question so the possible perpetrator can be caught "red-handed."

Furthermore, these attack detection and reaction mechanisms may be provided in a device that includes the functionality of both a reader and an upstream device. Such devices are generally referred to as "stand-alone" devices. These are a category of access control readers that have both the reader 108 and the upstream device in a single unit. They are commonly called "stand-alone' devices because they do not need anything else - they stand alone. i.e., are self-contained. A standalone solution is where all of the control electronics are in the keypad or reader. Compact systems are an easy to administer and cost-effective means of controlling access to a building. However, as the control electronics are all housed in the reader or keypad this type of system may not be recommended for exterior or high security interior doors.

Note that some facilities only lock the door outside of normal business hours. During normal business hours in which the door is not locked, an LED or other visual indicator on the reader may be illuminated green to signify this fact. During this time, cards do not need to be read to gain access and it is recommended that the upstream device completely ignore any data coming from the reader. This should be done so that the perpetrator is not given any feedback or clues as to the validity of a credential or format presented to the reader. Almost invariably, all reader always give some visual indication to the user (typically with either a short audible beep or visual indicator or both) that a card has been read successfully and then sends the credential data to the upstream device to make the decision if the credential holder will be granted access or not. One of the embodiments of this invention is to include this no-feedback functionality into the reader itself so that whenever the upstream device informs the reader that the door is unlocked, the reader will not even acknowledge any card presented to a reader in any way, audible or visual. If desired, the reader could do its heuristic detection of credential anomalies and send "events" to the upstream device as a clue that something may be amiss - however, no acknowledgment should be given to the user.

In one particularly easy to implement attack detection set of rules, the reader may be adapted to determine if more than a predetermined number of cards have been presented to the reader within a predetermined amount of time and further determine that all of the cards presented during that time were not granted access. If such a determination is made by the reader, then the reader may make a determination that an attack on the reader is being performed. The reader may also be intelligent enough to determine that some of the card presentations occurred during a relatively short amount of time and may, therefore, group all of those attempts into a single user attempt. If, however, the cards presented in the short amount of time had a different value in one or more fields (e.g., site code, card number, etc.), the reader may attribute each independent attempt to a different user attempt. Thus, in some embodiments, the reader may be adapted to determine that a predetermined number of user attempts have occurred in a predetermined amount of time and may correlate this determination to a possible attack on the system. If the reader detects such an event or series of events, then the reader may respond by disabling itself for a predetermined amount of time or by sending out an alert message to security authorities.

All of the above embodiments can be implemented in a rule table that is securely stored in the attack detection module 104 or in memory of the device storing the attack detection module 104. As new exploits are learned, these rules can be updated in the attack detection module 104 either via a secure connection between the upstream device and the reader or using some sort of sneaker-net mechanism such as command cards. Furthermore, certain rules can be automatically enabled or disabled by a time schedule, via a command from the upstream device, or locally using some manual method. In addition to the rules themselves being updatable and in effect as required, the counters, time penalties, and other criteria associated with individual rules can also be modified similarly.

As can be appreciated by one skilled in the art, the attack detection module 104 may be implemented as firmware on a reader 108, control panel 112, and/or intermediate device 116. Alternatively, or in addition, the attack detection module 104 may be provided as an application or instructions stored on a computer-readable medium residing on such a device. The instructions of the attack detection module 104 may be read and executed by a local processor, thereby resulting in the execution of one or more of the attack detection methods described above. It should be appreciated that the format in which the attack detection module 104 is provided on the reader 108, control panel 112, and/or intermediate device 116 is not necessarily limited to any particular format, but may vary according to the capabilities of the device on which it resides and the functions performed by the attack detection module 104.

The systems, methods and protocols of this invention can be implemented on a special purpose computer in addition to or in place of the described communication equipment, a programmed microprocessor or microcontroller and peripheral integrated circuit element(s), an ASIC or other integrated circuit, a digital signal processor, a hardwired electronic or logic circuit such as discrete element circuit, a programmable logic device such as PLD, PLA, FPGA, PAL, a communications device, such as a server, personal computer, any comparable means, or the like. In general, any device capable of implementing a state machine that is in turn capable of implementing the methodology illustrated herein can be used to implement the various communication methods, protocols and techniques according to this invention.

Furthermore, the disclosed methods may be readily implemented in software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, costs, and the particular software or hardware systems or microprocessor or microcomputer systems being utilized. The analysis systems, methods and protocols illustrated herein can be readily implemented in hardware and/or software using any known or later developed systems or structures, devices and/or software by those of ordinary skill in the applicable art from the functional description provided herein and with a general basic knowledge of the communication arts.

Moreover, the disclosed methods may be readily implemented in software that can be stored on a storage medium, executed on a programmed general-purpose computer with the cooperation of a controller and memory, a special purpose computer, a microprocessor, or the like. In these instances, the systems and methods of this invention can be implemented as program embedded on personal computer such as an applet, JAVA®, or a domain specific language, as a resource residing on a server or computer workstation, as a routine embedded in a dedicated communication system or system component, or the like. The system can also be implemented by physically incorporating the system and/or method into a software and/or hardware system, such as the hardware and software systems of a communications device or system.

It is therefore apparent that there has been provided, in accordance with the present invention, systems, apparatuses and methods for detecting attacks on an access control system or components thereof. While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the scope of this invention.

## Claims

1. An access control system comprising:
a card reader adapted to obtain access permissions information by reading one or more of (a) machine readable credentials, (b) an individual's biometric data, and (c) knowledge-based user input;
an upstream device in communication with the reader; and
an attack detection module adapted to determine that the reader has transmitted information obtained by the reader to the upstream device, determine that a LEDCTL signal has not been received at the reader from the upstream device within a predetermined amount of time after the reader transmitted the information to the upstream device, and based on determining that the LEDCTL signal has not been received within the predetermined amount of time, determine that an attack has been attempted on the reader.

2. The system in claim 1, wherein the attack detection module is contained in the reader, or wherein the attack detection module is contained in both the reader and the upstream device, or wherein the attack detection module is further adapted to report an attempted attack to security personnel by performing at least one of the following steps (i) generating an alert message and transmitting the alert message to a communication device operated by the security personnel, (ii) sounding an alarm, and (iii) illuminating a light source, or wherein the attack detection module is further adapted to disable the reader for a predetermined amount of time in response to detecting an attempted attack.

3. The system in claim 1, wherein the LEDCTL signal is detected as not being received at the reader within the predetermined amount of time by determining than a LEDTCL line has not been brought low within the predetermined amount of time.

4. The system in claim 1, wherein the LEDCTL signal is detected as not being received at the reader within the predetermined amount of time by determining that an LED indicator on the reader is not activated when a card is presented to the reader and a door controlled by the reader is in an unlocked state.

5. A method, comprising:
reading, at a card reader, authentication information from one or more of (a) a machine readable credential, (b) an individual's biometric data, and (c) knowledge-based user input and, based on the reading, obtaining access permissions;
transmitting, by the card reader, the authentication information access permissions to an upstream device;
determining, by an attack detection module, that the card reader has transmitted the access permissions to the upstream device and that an LEDCTL signal has not been received at the card reader from the upstream device within a predetermined amount of time after the card reader transmitted the authentication information access permissions to the upstream device; and
based on determining that the LEDCTL signal has not been received within the predetermined amount of time, determining that an attack has been attempted on the card reader.

6. The method of claim 5, further comprising:
generating an alert message; and
causing the alert message to be audibly and/or visually presented.

7. The method of claim 6, wherein the alert message is presented at the reader, or wherein causing the alert message to be audibly and/or visually presented comprises transmitting the alert message to a device operated by security personnel such that the device operated by the security personnel presents the alert message to the security personnel.

8. The method of claim 5, further comprising disabling functions of the reader for a predetermined amount of time.

9. The method of claim 8, wherein the alert message is presented at the reader, or wherein causing the alert message to be audibly and/or visually presented comprises transmitting the alert message to a device operated by security personnel such that the device operated by the security personnel presents the alert message to the security personnel.

10. The method of claim 7, further comprising disabling functions of the reader for a predetermined amount of time.

## Patentansprüche

1. Zugangskontrollsystem, das Folgendes umfasst:
einen Kartenleser, der dafür ausgelegt ist, Zugangserlaubnisinformationen durch Lesen (a) maschinenlesbarer Legitimationen und/oder (b) persönlicher biometrischer Daten und/oder (c) einer wissensbasierten Anwendereingabe zu erhalten;
eine vorgeschaltete Vorrichtung in Kommunikation mit dem Leser; und
ein Angriffsdetektionsmodul, das dafür ausgelegt ist, zu bestimmen, dass der Leser Informationen, die von dem Leser erhalten werden, der vorgeschalteten Vorrichtung gesendet hat, zu bestimmen, dass ein LEDCTL-Signal bei dem Leser von der vorgeschalteten Vorrichtung innerhalb einer vorgegebenen Zeitdauer seit dem Senden der Informationen zu der vorgeschalteten Vorrichtung durch den Leser nicht empfangen worden sind, und anhand der Bestimmung, dass das LEDCTL-Signal innerhalb der vorgegebenen Zeitdauer nicht empfangen worden ist, zu bestimmen, dass ein Angriff auf den Leser versucht worden ist.

2. System nach Anspruch 1, wobei das Angriffsdetektionsmodul in dem Leser enthalten ist oder wobei das Angriffsdetektionsmodul sowohl in dem Leser als auch in der vorgeschalteten Vorrichtung enthalten ist oder wobei das Angriffsdetektionsmodul ferner dafür ausgelegt ist, einen versuchten Angriff an Sicherheitspersonal zu melden, um wenigstens einen der folgenden Schritte auszuführen: (i) Erzeugen einer Warnnachricht und Senden der Warnnachricht an eine von dem Sicherheitspersonal betriebene Kommunikationsvorrichtung, (ii) Erklingenlassen eines Alarms und (iii) Erleuchten einer Lichtquelle, oder wobei das Angriffsdetektionsmodul ferner dafür ausgelegt ist, den Leser für eine vorgegebene Zeitdauer in Reaktion auf die Detektion eines versuchten Angriffs zu sperren.

3. System nach Anspruch 1, wobei das LEDCTL-Signal als von dem Leser innerhalb der vorgegebenen Zeitdauer nicht empfangen detektiert wird, indem bestimmt wird, dass ein LEDCTL-Leitung innerhalb der vorgegebenen Zeitdauer nicht auf tief gebracht worden ist.

4. System nach Anspruch 1, wobei das LEDCTL-Signal als von dem Leser innerhalb der vorgegebenen Zeitdauer nicht empfangen detektiert wird, indem bestimmt wird, dass eine LED-Anzeige bei dem Leser nicht aktiviert worden ist, wenn dem Leser eine Karte präsentiert wird und eine durch den Leser gesteuerte Tür in einem entriegelten Zustand ist.

5. Verfahren, das Folgendes umfasst:
Lesen bei einem Kartenleser von Authentifizierungsinformationen von (a) einer maschinenlesbaren Legitimation und/oder (b) persönlichen biometrischen Daten und/oder (c) einer wissensbasierten Anwendereingabe und anhand des Lesevorgangs Erhalten einer Zugangserlaubnis;
Senden durch den Kartenleser der Authentifizierungsinformation-Zugangserlaubnis zu einer vorgeschalteten Vorrichtung;
Bestimmen durch ein Angriffsdetektionsmodul, dass der Kartenleser die Zugangserlaubnis zu der vorgeschalteten Vorrichtung gesendet hat und dass ein LEDCTL-Signal innerhalb einer vorgegebenen Zeitdauer seit dem Senden der Authentifizierungsinformation-Zugangserlaubnis zu der vorgeschalteten Vorrichtung durch den Kartenleser bei dem Kartenleser von der vorgeschalteten Vorrichtung nicht empfangen worden ist; und
anhand der Bestimmung, dass das LEDCTL-Signal nicht innerhalb der vorgegebenen Zeitdauer empfangen worden ist, Bestimmen, dass ein Angriff auf den Kartenleser versucht worden ist.

6. Verfahren nach Anspruch 5, das ferner Folgendes umfasst:
Erzeugen einer Warnnachricht;
Bewirken, dass die Warnnachricht hörbar und/oder sichtbar präsentiert wird.

7. Verfahren nach Anspruch 6, wobei die Warnnachricht bei dem Leser präsentiert wird oder wobei das Bewirken, dass die Warnnachricht hörbar und/oder sichtbar präsentiert wird, das Senden der Warnnachricht zu einer von Sicherheitspersonal betriebenen Vorrichtung, so dass die durch das Sicherheitspersonal betriebene Vorrichtung die Warnnachricht für das Sicherheitspersonal präsentiert, umfasst.

8. Verfahren nach Anspruch 5, das ferner das Sperren von Funktionen des Lesers für eine vorgegebene Zeitdauer umfasst.

9. Verfahren nach Anspruch 8, wobei die Warnnachricht bei dem Leser präsentiert wird oder wobei das Bewirken, dass die Warnnachricht hörbar und/oder sichtbar präsentiert wird, das Senden der Warnnachricht zu einer von Sicherheitspersonal betriebenen Vorrichtung, so dass die durch das Sicherheitspersonal betriebene Vorrichtung die Warnnachricht für das Sicherheitspersonal präsentiert, umfasst.

10. Verfahren nach Anspruch 7, das ferner das Sperren von Funktionen des Lesers für eine vorgegebene Zeitdauer umfasst.

## Revendications

1. Système de commande d'accès comprenant :
un lecteur de carte adapté pour obtenir des informations d'autorisations d'accès en lisant une ou plusieurs (a) références lisibles par machine, (b) données biométriques d'un individu, et (c) entrée d'utilisateur à base de connaissances ;
un dispositif amont en communication avec le lecteur ; et
un module de détection d'attaque adapté pour déterminer que le lecteur a transmis des informations obtenues par le lecteur au dispositif amont, déterminer qu'un signal LEDCTL n'a pas été reçu au niveau du lecteur depuis le dispositif amont dans une période de temps prédéterminée après que le lecteur a transmis les informations au dispositif amont, et en fonction de la détermination que le signal LEDCTL n'a pas été reçu dans la quantité de temps prédéterminé, déterminer qu'une attaque du lecteur a été tentée.

2. Système selon la revendication 1, dans lequel le module de détection d'attaque est contenu dans le lecteur, ou dans lequel le module de détection d'attaque est contenu à la fois dans le lecteur et le dispositif amont, ou dans lequel le module de détection d'attaque est adapté en outre pour signaler une tentative d'attaque à un personnel de sécurité en exécutant au moins l'une des étapes suivantes : (i) génération d'un message d'alerte et transmission du message d'alerte à un dispositif de communication actionné par le personnel de sécurité, (ii) déclenchement d'une alarme et (iii) actionnement d'une source de lumière, ou dans lequel le module de détection d'attaque est adapté en outre pour désactiver le lecteur pendant une période de temps prédéterminée en réponse à la détection d'une tentative d'attaque.

3. Système selon la revendication 1, dans lequel il est détecté que le signal LEDCTL n'a pas été reçu au niveau du lecteur dans la période de temps prédéterminée en déterminant qu'une ligne LEDCTL n'a pas été mise à un niveau bas dans la période de temps prédéterminée.

4. Système selon la revendication 1, dans lequel il est détecté que le signal LEDCTL n'a pas été reçu au niveau du lecteur dans la période de temps prédéterminée en déterminant qu'un témoin à DEL sur le lecteur n'est pas activé quand une carte est présentée au lecteur et qu'une porte commandée par le lecteur se trouve dans un état déverrouillé.

5. Procédé, comprenant :
la lecture, au niveau d'un lecteur de carte, d'informations d'authentification depuis une ou plusieurs (a) d'une référence lisible par machine, (b) de données biométriques d'un individu, et (c) d'une entrée d'utilisateur à base de connaissances et, en fonction de la lecture, l'obtention d'autorisations d'accès ;
la transmission, par le lecteur de carte, des autorisations d'accès aux informations d'authentification à un dispositif amont ;
la détermination, par un module de détection d'attaque, que le lecteur a transmis les autorisations d'accès au dispositif amont, et qu'un signal LEDCTL n'a pas été reçu au niveau du lecteur depuis le dispositif amont dans une période de temps prédéterminée après que le lecteur a transmis les autorisations d'accès aux informations d'authentification au dispositif amont ; et
en fonction de la détermination que le signal LEDCTL n'a pas été reçu dans la période de temps prédéterminée, la détermination d'une tentative d' attaque du lecteur au niveau du lecteur.

6. Procédé selon la revendication 5, comprenant en outre :
la génération d'un message d'alarme ; et
la présentation audible et/ou visuelle du message d'alarme.

7. Procédé selon la revendication 6, dans lequel le message d'alarme est présenté au niveau du lecteur, ou dans lequel la présentation audible et/ou visuelle du message d'alarme comprend la transmission du message d'alarme à un dispositif actionné par le personnel de sécurité de telle sorte que le dispositif actionné par le personnel de sécurité présente le message d'alarme au personnel de sécurité.

8. Procédé selon la revendication 5, comprenant en outre les fonctions de désactivation du lecteur pendant une période de temps prédéterminée.

9. Procédé selon la revendication 8, dans lequel le message d'alarme est présenté au niveau du lecteur, ou dans lequel la présentation audible et/ou visuelle du message d'alarme comprend la transmission du message d'alarme à un dispositif actionné par le personnel de sécurité de telle sorte que le dispositif actionné par le personnel de sécurité présente le message d'alarme au personnel de sécurité.

10. Procédé selon la revendication 7, comprenant en outre des fonctions de désactivation du lecteur pendant une période de temps prédéterminée.
